# EUROPEAN PATENT SPECIFICATION

(11) **EP 3 205 619 B1**
(45) Date of publication and mention of the grant of the patent: **26.12.2018**
(21) Application number: 16155701.2
(22) Date of filing: 15.02.2016
(51) Int. Cl.: B66F 9/06, B62B 3/00, B66F 9/075

(54) **FORK-LIFT TRUCK**
GABELSTAPLER
CHARIOT ÉLÉVATEUR À FOURCHE

(43) Date of publication of application: 16.08.2017
(73) Proprietor: Toyota Material Handling Manufacturing Sweden AB, 595 81 Mjölby (SE)
(72) Inventor: TENGVERT, Peter, 591 52 Motala (SE); AHNBERG, Boris, 590 33 Fornåsa (SE); ÖSTERSKOG, Johan, 590 18 Mantorp (SE)
(74) Representative: Zacco Sweden AB

(56) References cited:
- WO-A1-2006/107120
- DE-U1- 9 407 253
- US-A- 5 325 935

## Description

The present invention relates to a fork-lift truck according to the preamble of claim 1 and also to method of operating a fork-lift truck according to claim 11, and a computer readable software according to claim 12.

### BACKGROUND

Fork-lift trucks have been used for a long time to handle goods and short way transports of goods and material. They are mostly used for handling pallets that houses the goods to be transported. In general they operate in restricted areas, such as warehouses, super markets, loading docks when unloading lorries etc. In order to be able to manoeuvre in these the restricted areas the steering operation of the fork-lift trucks is in general performed by positioning the steering wheel or wheels such that the fork-lift truck can travel with the steering wheels at the rear of the vehicle. This way of arranging a fork-lift truck has been generally accepted to function very well, as it gives good manoeuvrability. If particularly good manoeuvrability is needed this is generally made by making the vehicle shorter. In general for electric fork-lift trucks the drive wheel can rotate around a vertical rotational axis for controlling the drive direction of the fork-lift truck.

It has been suggested to increase manoeuvrability for simple pallet wagons; one such pallet wagon is disclosed in US2015/0056056 A1, another in US 5325935 A1 and one more of such devices in WO 2006/107120 A1 disclosing a transverse travelling system.

### SHORT DESCRIPTION OF THE INVENTION

By making the fork-lift truck shorter it will get better manoeuvrability, as the turning radius will decrease. However this will of course also limit the possibility to handle larger pallets, or goods.

In order to achieve a better manoeuvrability the prior art of pallet wagons have suggested a double set up of wheels on the support legs of a pallet wagon.

The solution according to the prior art of a pallet wagon is not particularly suitable for a motorised fork-lift truck, it is difficult to control the pallet wagon as it has swivelling wheels both in front and in back, and linear wheels in the middle. This set up is not possible for a fork-lift truck as the motor needs to be accommodated in one end of the fork-lift truck, in order to for example not obstruct the load carriers. Also for reasons of safety regarding directional stability linear wheels under the forks are the standard in the fork-lift industry.

In order to solve at least one of the problems with the prior art and achieve a better manoeuvrability according to one aspect there is suggested a fork-lift truck, comprising a pair of support legs, two lift forks for lifting and handling pallets, wherein each support leg is provided with at least one swivelling wheel, wherein the fork-lift truck comprises two drive wheels which are individually controllable, wherein each drive wheel is connected to a respective drive motor, wherein each of the drive wheels have a respective fixed rotational axis with reference to the fork-lift truck, such that the drive wheels rotational plane is fixed in parallel with the longitudinal direction of the fork-lift truck.

By arranging the fork-lift truck like this several advantages are achieved, such as better manoeuvrability, much shorter turn radius, less movable parts, lower instep and a more compact fork-lift truck. A fixed rotational axis provides for a particularly simple installation of the drive wheels. It improves the directional stability of the fork-lift truck. With the fixed rotational axis the installation will be less space consuming. The fixed axis can further support heavy weights, compared with a drive wheel that is rotatable in a vertical axis.

Fork-lift truck according to the above wherein further comprised is an operator platform (5) for operator travel with the fork-lift truck, wherein the platform is positioned below the uppermost part of each drive wheel.

By arranging the operator platform closer to the centre of gravity of the fork-lift truck a shorter fork-lift truck is achieved. This increases the manoeuvrability even further.

Fork-lift truck according to the above wherein the operator platform is positioned on or below the centre of rotation of the drive wheels.

By arranging the operator platform on or below the centre of rotation of the drive wheels, the centre of gravity is lowered, which increases the stability of the fork-lift truck. Further also the ergonomic is improved, and also the effectiveness of a picking operation where the operator steps of and on the platform many times, is improved, as the step to the platform is lowered.

Fork-lift truck according to the above wherein the operator platform is positioned in a position between the drive wheels.

By positioning the operator platform between the drive wheels the operator is protected from collisions sideways. Thus this improves the safety when operating the fork-lift truck considerably.

Fork-lift truck according to the above, wherein the fork-lift truck, comprises a tiller arm for controlling the operation of the fork-lift truck, wherein the tiller arm has no mechanical coupling to the steering drive wheels.

The tiller arm is thus arranged such that it is operating by a steer-by-wire system. This system makes it possible to adapt the steering action. For example a smaller steering angle of the tiller arm can give a larger steering action. Further the fork-lift truck can be arranged to prevent excessive steering action, for example if the operator falls and brings the tiller arm along, the steer-by wire system can take action not to alter the travel direction.

Fork-lift truck according to the above, wherein the fork-lift truck comprises a joy-stick for controlling the operation of the fork-lift truck.

A joystick can for example be used in parallel with a tiller arm, for fine adjustments of the position of the fork-lift truck. A fork-lift truck could also be only guided by a joystick. The joystick is ergonomic and allows for easy operation. It is preferred to use a fork-lift truck which cannot be operated with a walking operator with a joystick. In general a walking operator requires a tiller arm.

Fork-lift truck according to the above, wherein the fork-lift truck comprises an operation control-unit, wherein the operation control-unit is arranged to control the left drive motor and the right drive motor individually.

Having an operator control unit is preferred as it gives the possibility to adjust and adapt the control of the fork-lift truck by means of software updates.

Fork-lift truck according to any of the above, wherein the swivelling wheels are arranged to have an equal or smaller diameter, than the height of the support legs.

By arranging the swivelling wheels with a relatively thin thickness, the swivelling wheels can be adopted to be attached to ordinary support legs without extensive modifications to the design of the support legs. The operation of the fork-lift truck and in particular the handling of pallets that are positioned low will be considerably simplified.

Fork-lift truck according to the above, wherein the horizontal rotational centre of the fork-lift truck is positioned in a position on a line drawn between the respective rotational axis of the drive wheels, this is achieved by controlling the drive wheels by individual rotation of the drive wheels forward and/or backward and with individual rotational speed.

The positioning of the rotational centre in a different position than the wheels or rollers under the support wheels that is standard today in the fork-lift industry provides for a particularly good manoeuvrability. It also alters the position of the rotational centre closer to or to a common position of the horizontal position of the centre of gravity of a carried cargo, providing a very safe operation of the fork-lift truck as risk of tip over is considerably reduced.

Fork-lift truck according to the above, wherein the forks are arranged to have an at least partly hollow underside, such that the forks can be lowered onto the support legs thereby housing at least part of the support legs, and thereby making the forks able to engage and lift a pallet that is positioned on the ground, floor or support on which the fork-lift truck also is positioned.

By arranging the forks in this way in combination with the swivelling wheels the signature of the combination of the support legs and the forks, can be kept very low, which in turn means that a pallet that is standing on the floor can easily be engaged, lifted and transported.

Method of controlling a fork-lift truck according to the above comprising the steps of:
- (s1) start of a steering manoeuvre,
- (s2) receipt of an input of desired drive direction from a control device by an operation control unit,
- (s3) determining a desired drive deviation by the operation control unit,
- (s4) sending a drive command output to the drive motor control circuits,
- (s5) performing a steering manoeuver by sending commands from the drive motor control circuits to the respective drive motor of each respective drive wheel, such that a steering manoeuvre is performed solely by altering the rotational speed and/or rotational direction of each of the drive wheels,
- (s6) the control unit ends the steer manoeuvre when the desired heading is reached.

By controlling a fork-lift truck with this method, a particular good manoeuvrability is achieved. The safety of the fork-lift truck is also improved. Risk of tipping of the fork-lift truck can be reduced. It is possible to more freely achieve a desired manoeuvrability for certain operation positions. When traveling at higher speeds manoeuvrability can be reduced. When travelling at low or no speed manoeuvrability can be increased.

The aspects of the inventions also include computer readable software that when executed on a fork-lift truck according to the above performs the method according to the above, in the control unit of the fork-lift truck.

By having particular software for controlling the fork-lift truck, the easiness or possibility of adjusting and adapting the fork-lift truck and the method, is considerably improved, and compared with hard ware programming.

### LIST OF DRAWINGS

Figure 1 discloses a fork-lift truck according to the suggested aspect.
Figure 2 discloses a fork-lift truck according to the suggested aspect above.
Figure 3 discloses a support wheel to be used with a fork-lift truck according to the aspect above.
Figure 4 discloses the position of the swivelling wheels on a fork-lift truck according to the aspect above.
Figure 5a, 5b discloses the manoeuvrability according to the aspect above.

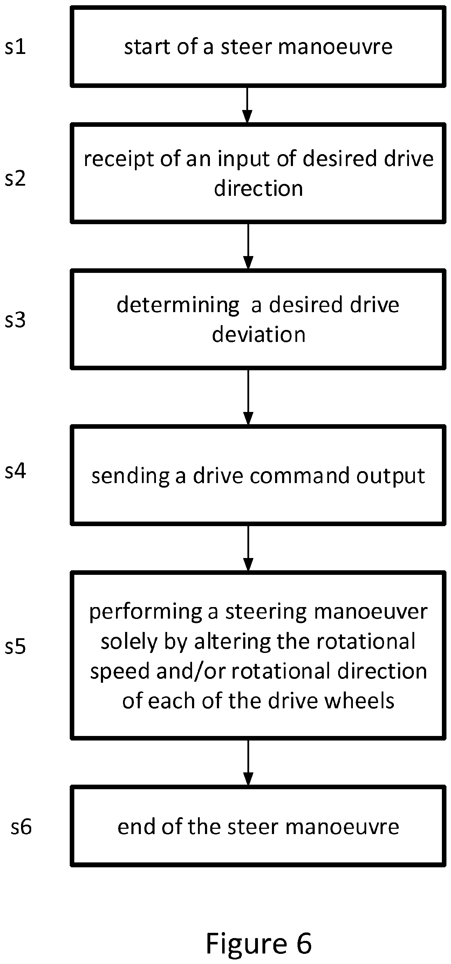

Figure 6 discloses the method of controlling a fork-lift truck according to the aspect above.

### DETAILED DESCRIPTION

The present disclosure is related to a fork-lift truck. The fork-lift truck in general has a load carrying unit and drive unit. The fork-lift truck can have a mast to which the load carrying unit is attached; such that a load can be positioned at a different level than that the fork-lift truck is operating on. The fork-lift truck can allow for a walking operator. The fork-lift truck can also be designed to not allow for a walking operator. The presented fork-lift truck cannot be a pure counter balance fork-lift truck, as this would not function properly with the presented features. The fork-lift truck in general is provided with a hydraulic system for powering the load carrying unit and making it possible to lift and handle heavy loads.

In the below unique features have received an own reference number whereas common features receive the same reference number.

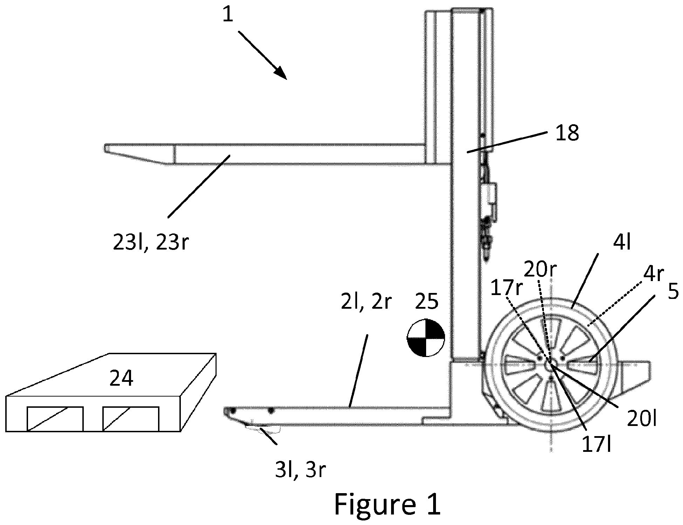

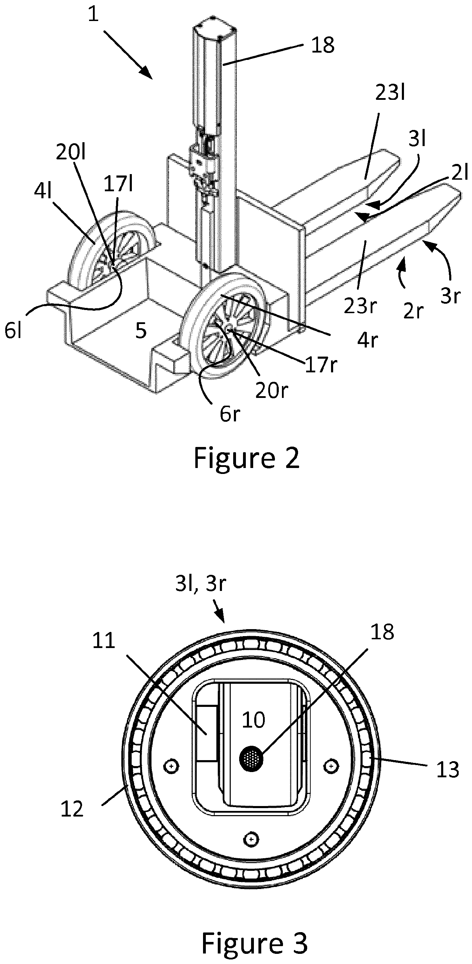

Figure 1 and Figure 2 discloses a fork-lift truck 1 according to a first aspect of the invention. The fork-lift truck 1 in Figure 1-2 has a lift mast 18, this is however optional, no mast or a larger mast is also possible for the described aspect. The fork-lift truck 1 comprises four points that contacts the surface on which the fork-lift truck 1 is operating. The fork-lift truck has a left support leg 2l, and a right support leg 2r. The support legs 2l, 2r, have each a swivelling wheel 3l, 3r. The fork-lift 1 further comprises a drive section attached to the support legs 2l, 2r. The drive section comprises two drive wheels, a left drive wheel 4l and a right drive wheel 4r. Between the drive wheels 4l, 4r, there is positioned a platform for a standing operator. The platform 5 is only optional; the fork-lift truck would function well with a walking operator also. However it should be understood that nothing of the disclosure is restricted to fork-lift trucks allowing for a walking operator. In particular a very narrow isle fork-lift truck could also be designed with all the aspects described. Such a fork-lift truck would not allow for a walking operator. The drive wheels 4l, 4r, are each individually attached to a respective drive motor, 6l and 6r. The drive motors 6l, 6r, are individually controllable. Thus each of the drive wheels 4l, 4r can be operated individually. This means that one wheel 4l for example can rotate in an opposite direction of the other wheel 4r. The drive wheels 4l, 4l can also rotate in the same direction but at different speeds. The fork-lift truck 1 further comprises a pair of lift- forks 23l, 23r.

The drive motors 6l, 6r are preferably the same size and same design. The drive motors 6l, 6r are preferably electric motors, preferably the motors are electric brushless motors, and this is an advantage in particular with regard to maintenance and performance.

The drive wheels 4l; 4r can be positioned to each side of an operator platform 5, as seen in Figures 1, 2, 4, 5a, 5b. This arrangement makes the fork-lift truck 1 shorter as the operator previously was positioned on a platform that was completely at the rear end of the fork-lift truck 1. In general the drive wheels 4l, 4r have a diameter such that they can have the operator platform 5 installed below their rotational axis 20l, 20r, which provides for a low step for the operator. The rotational axis 11 of the drive wheels 4l, 4r are linear and fixed. By this is meant that the rotational axis 20l of the left drive wheel 4l is aligned with the rotational axis 20r of the right drive wheel 4r. However it is not mandatory that the rotational axis 20l, 20r of the two drive wheels 4l, 4r are aligned, however they should always be parallel.

The fork-lift truck 1 comprises an operation control unit 16. The operation control unit 16 is arranged to be able to operate the fork-lift truck 1. The operation control 16 unit comprises computer readable software that when executed in the control unit 16 can control the fork-lift truck 1. In particular the operation control unit 16 can act as an interface between a manual command from an operator, to an output command sent to the drive motors 6l, 6r. The operation control unit 16 can be a separate control unit of the fork-lift truck 1, or it can be included in a main computer of the fork-lift truck 1. It is not excluded that the fork-lift truck 1 can be controlled by means of an external control unit that constitutes or complements the operation control unit 16. The external operational control unit 16 is communicating with the fork-lift truck 1 preferably by means of a wireless link.

The support legs 2l, 2r, are in general two. The support legs 2l, 2l in general points in a longitudinal direction of the fork-lift truck 1. The support legs 2l, 2r have as stated a swivelling wheel 3l, 3r at the front section on the underside. The support legs 2l, 2r are in general of a predetermined length that allows a load that is carried by the fork-lift truck 1 to have its centre of gravity between the swivelling wheels 3l, 3r and the drive wheels 4r, 4l. This is exemplified by the centre of gravity 25 as disclosed in Figure 1. By this it should be understood that the presented fork-lift truck 1 is not apply a pure counter balance fork-lift truck.

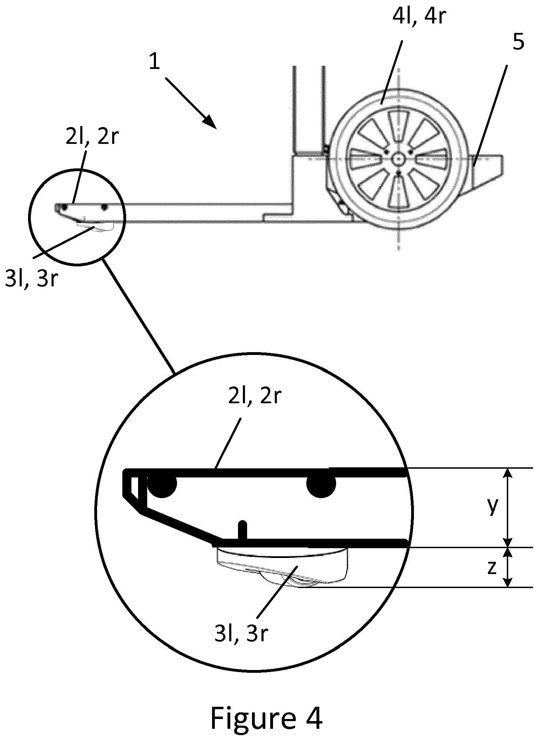

The swivelling wheels 3l, 3r, have a bearing 13 that runs close to the periphery of the housing 12 of the wheels 3l, 3r, see Figure 3. The roller 10 of the swivelling wheels 3l, 3r is not centred on the rotational axis 11 of the roller 10. By this arrangement the swivelling wheels 3l; 3r will easier reach a tow position when altering direction. Tow position should be understood as a position where the rotational axis 11 is behind the swivelling centres 18 of the respective swivel wheel 3l, 3r. The diameter z of the swivelling wheels is preferred to be smaller than the height y of the support legs 2l, 2r, however this is not mandatory, see Figure 4.

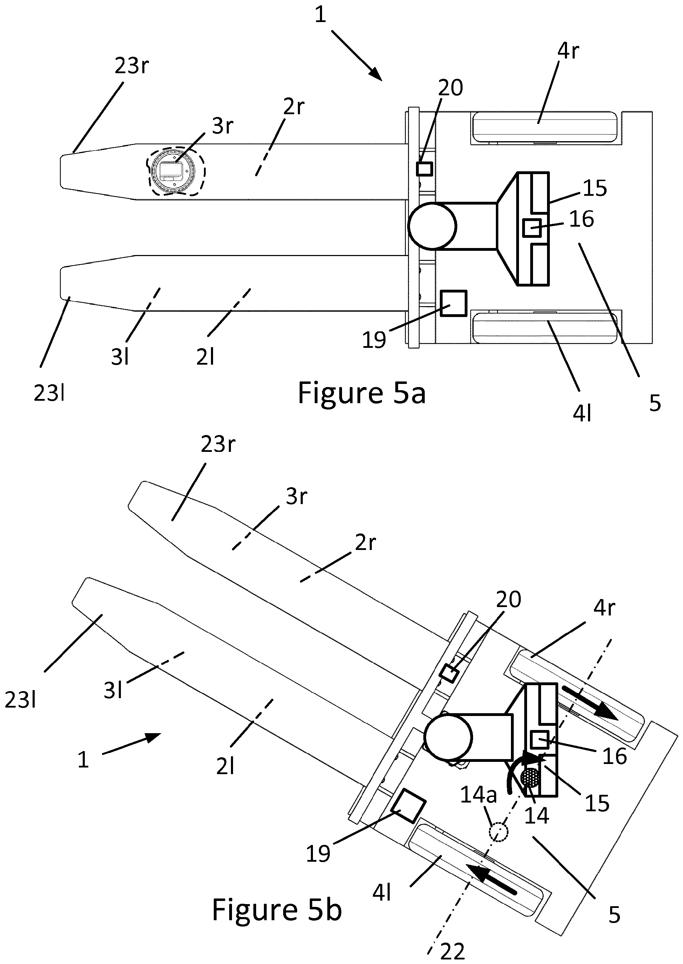

Figure 5a and 5b discloses the fork lift truck 1 from above. A control device is disclosed in the form of a tiller arm 15. However the tiller arm 15 is optional, it is likewise possible to use a joystick 20, a steering wheel or any other control device. The operation control unit 16 is preferably positioned in the tiller arm 15. The right support leg 2r discloses schematically the right swivel wheel 3r in a cut out. A joy-stick 20 can be used in parallel with a tiller arm 15, however it should of course not be possible to use them at the same time. A joy-stick 20 can also be used alone. For the present disclosure all the control devices are only steer-by-wire. This means that there is no mechanical coupling between the control device and the drive wheels 4l, 4l. This considerably simplifies the drive chain, as it is possible to exclude gears, transmission etc.

The fork-lift truck 1 comprises an energy source, preferably a battery, and other common features known to the person skilled in the art, such as hydraulic lift cylinders, hydraulic pump etc.

The function of the fork-lift truck 1 shall now be explained referring to Figure 5a and Figure 5b. An operator desires to change the direction of travel to the right, i.e. upwards in Figure 5a. He then moves the tiller arm 15 counter clock wise to a position as disclosed in Figure 5b. The operational control unit 16 receives an input that the tiller arm 15 has been moved, and the control unit applies computer readable software that when executed on the operational control unit 16 makes the fork lift truck 1 apply a method comprising the steps of:
s1 start of a steer manoeuvre,
s2 receipt of an input of desired drive direction form a control device, by an operation control unit,
s3 determining a desired drive deviation by the operation control unit,
s4 sending a drive command output to the drive motor control circuits,
s5 performing a steering manoeuver by sending commands from the drive motor control circuits to the respective drive motor of each respective drive wheel, such that a steering manoeuvre is performed solely by altering the rotational speed and/or rotational direction of each of the drive wheels.
s6 the control unit ends the steer manoeuvre when the desired heading is reached.

Thus in other words, the operational control unit 16 receives an input that the tiller arm 15 has been moved. Further the input is converted to a drive command output by means of software stored in the operational control unit 16. The drive command output is sent to drive motor control circuits 19 of the fork-lift truck 1. The drive motor control circuits provide a determined amount of current to the left drive motor 17l and the left wheel 4l is rotated counter clockwise and also a determined amount of current to the right drive motor 17r and the right drive wheel 4r is rotated clockwise. As the fork-lit truck 1 thus rotates horizontally, the swivelling wheels 3l, 3r are allowed to rotate freely and the support legs 2l, 2r are moved in a circular movement sideways. The fork-lift truck 1 thus rotates around a centre point 14, 14a that is positioned on a line 22 drawn between the rotational axis 11 of the drive wheels 4l, 4r. In the above horizontal rotational direction means that the rotational axis 20l, 20r of each drive wheel 4r, 4l are horizontal. It should be understood that the rotation centre point 14 can have its position shifted by applying different rotating speeds to the two drive wheels 4l, 4r, this is exemplified by the rotational point 14a as disclosed in Figure 5b. Even if explained in relation of the tiller arm 15 it should be understood the method is performed in the same way when using a joy-stick 20 or a steering wheel.

It should also be understood that the control of the respective drive wheels 4l, 4r can be achieved by braking. That is when the fork-lift truck 1 travels at speed, a braking of one of the drive wheels 4l, and 4r will initiate a steer action for the fork-lift truck 1. Thus it is possible to steer the truck without consuming energy, despite the fixed rotational axis of the drive wheels 4l, 4r.

By controlling the fork-lift truck 1 in this manner a very good manoeuvrability is achieved. Further no gear from the drive motor to the drive wheel is needed as is the most general way of designing forklift trucks. Also the maintenance is simplified as there is no need for a gear between the drive motor and the drive wheels.

## Claims

1. Fork-lift truck (1), comprising a pair of support legs (2l, 2r), two lift forks (23l, 23r) for lifting and handling pallets (24), wherein each support leg (2l, 2r) is provided with at least one swivelling wheel (3l, 3r), **characterized in that** the fork-lift truck (1) comprises two drive wheels (4l, 4r) which are individually controllable, wherein each drive wheel (4r, 4l) is connected to a respective drive motor (6l, 6r), wherein each of the drive wheels (4l, 4r) have a respective fixed rotational axis (20l, 20r) with reference to the fork-lift truck (1), such that the drive wheels rotational plane is fixed in parallel with the longitudinal direction of the fork-lift truck (1).

2. Fork-lift truck (1) according to claim 1, wherein further comprised is an operator platform (5) for operator travel with the fork-lift truck (1), wherein the platform (5) is positioned below the uppermost part of each drive wheel (4l, 4r).

3. Fork-lift truck (1) according to claim 2, wherein the operator the platform (5) is positioned on or below the centre of rotation of the drive wheels (4l, 4r).

4. Fork-lift truck (1) according to any of the claims 2 or 3, wherein the operator platform (5) is positioned in a position between the drive wheels (4l, 4r).

5. Fork-lift truck (1) according to any of the claims above, wherein the fork-lift truck (1), comprises a tiller arm (15) for controlling the operation of the fork-lift truck (1).

6. Fork-lift truck (1) according to any of the claims above, wherein the fork-lift truck (1) comprises a joy-stick (20) for controlling the operation of the fork-lift truck (1).

7. Fork-lift truck (1) according to any of the claims above, wherein the fork-lift truck (1) comprises an operation control-unit (16), wherein the operation control-unit (16) is arranged to control the left drive motor (6l) and the right drive motor (6r) individually.

8. Fork-lift truck (1) according to any of the claims above, wherein the swivelling wheels are arranged to have an equal or smaller diameter (z), than the height (y) of the support legs (2l, 2r).

9. Fork-lift truck (1) according to any of the claims above, wherein the horizontal rotational centre (14) of the fork-lift truck (1) is positioned in a position on a line (22) drawn between the respective rotational axis (20l, 20r) of the drive wheels (4l, 4r), this is achieved by controlling the drive wheels (4l, 4r) by individual rotation of the drive wheels (4l, 4r) forward and/or backward and with individual rotational speed.

10. Fork-lift truck (1) according to any of the claims above, wherein the forks (23l, 23r) are arranged to have an at least partly hollow underside, such that the forks (23l, 23r) can be lowered onto the support legs (2l, 2r) thereby housing at least part of the support legs (2l, 2r), and thereby making the forks (23l, 23r) able to engage and lift a pallet that is positioned on the ground, floor or support on which the fork-lift truck (1) also is positioned.

11. Method of controlling a fork-lift truck (1) according to any of the claims 1-10 comprising the steps of:
- (s1) start of a steering manoeuvre,
- (s2) receipt of an input of desired drive direction form a control device by an operation control unit,
- (s3) determining a desired drive deviation by the operation control unit,
- (s4) sending a drive command output to the drive motor control circuits,
- (s5) performing a steering manoeuver by sending commands from the drive motor control circuits to the respective drive motor of each respective drive wheel, such that a steering manoeuvre is performed solely by altering the rotational speed and/or rotational direction of each of the drive wheels,
- (s6) the control unit ends the steer manoeuvre when the desired heading is reached.

12. Computer readable software that when executed on a fork-lift truck according to any of the claims 1-10 performs the method according to claim 11.

## Patentansprüche

1. Gabelstapler (1), umfassend ein Paar Radarme (2l, 2r), zwei Hubgabeln (23l, 23r) zum Anheben und Handhaben von Paletten (24), wobei jeder der Radarm (2l, 2r) mit mindestens einem Schwenkrad (3l, 3r) versehen ist, **dadurch gekennzeichnet, dass** der Gabelstapler (1) zwei Antriebsräder (4l, 4r) umfasst, die einzeln steuerbar sind, wobei jedes Antriebsrad (4r, 4l) mit einem jeweiligen Antriebsmotor (6l, 6r) verbunden ist, wobei jedes der Antriebsräder (4l, 4r) eine in Bezug auf den Gabelstapler (1) feststehende Drehachse (20l, 20r) aufweist, sodass die Antriebsräder-Drehebene parallel zur Längsrichtung des Gabelstaplers (1) fixiert ist.

2. Gabelstapler (1) nach Anspruch 1, wobei ferner eine Bedienerplattform (5) vorgesehen ist, sodass der Bediener mit dem Gabelstapler (1) fahren kann, wobei die Plattform (5) unterhalb des obersten Teils jedes Antriebsrads (4l, 4r) positioniert ist.

3. Gabelstapler (1) nach Anspruch 2, wobei die Bedienerplattform (5) auf oder unterhalb des Drehpunkts der Antriebsräder (4l, 4r) positioniert ist.

4. Gabelstapler (1) nach einem der Ansprüche 2 oder 3, wobei die Bedienerplattform (5) in einer Position zwischen den Antriebsrädern (4l, 4r) angeordnet ist.

5. Gabelstapler (1) nach einem der vorhergehenden Ansprüche, wobei der Gabelstapler (1) einen Schwenkhebel (15) zum Steuern des Betriebs des Gabelstaplers (1) umfasst.

6. Gabelstapler (1) nach einem der vorhergehenden Ansprüche, wobei der Gabelstapler (1) einen Joystick (20) zum Steuern des Betriebs des Gabelstaplers (1) umfasst.

7. Gabelstapler (1) nach einem der vorhergehenden Ansprüche, wobei der Gabelstapler (1) eine Bediensteuereinheit (16) umfasst, wobei die Bediensteuereinheit (16) dafür angeordnet ist, um den linken Antriebsmotor (6l) und den rechten Antriebsmotor (6r) einzeln zu steuern.

8. Gabelstapler (1) nach einem der vorhergehenden Ansprüche, wobei die Schwenkräder so angeordnet sind, dass sie einen gleichen oder kleineren Durchmesser (z) als die Höhe (y) der Radarm (2l, 2r) aufweisen.

9. Gabelstapler (1) nach einem der vorhergehenden Ansprüche, wobei der horizontale Drehpunkt (14) des Gabelstaplers (1) in einer Position auf einer Linie (22) zwischen der jeweiligen Drehachse (20l, 20r) der Antriebsräder (4l, 4r) angeordnet ist, wobei dies durch Steuern der Antriebsräder (4l, 4r) mittels individueller Drehung der Antriebsräder (4l, 4r) nach vorn und/oder hinten und mit individueller Drehzahl erreicht wird.

10. Gabelstapler (1) nach einem der vorhergehenden Ansprüche, wobei die Gabeln (23l, 23r) so angeordnet sind, dass sie eine zumindest teilweise hohle Unterseite aufweisen, sodass die Gabeln (23l, 23r) auf die Radarme (2l, 2r) abgesenkt werden können, wodurch zumindest ein Teil der Radarm (2l, 2r) aufgenommen wird und die Gabeln (23l, 23r) dadurch in eine Palette eingreifen und diese anheben können, die auf dem Untergrund, Boden, Fußboden oder einer Unterlage positioniert ist, auf der auch der Gabelstapler (1) positioniert ist.

11. Verfahren zum Steuern eines Gabelstaplers (1) nach einem der Ansprüche 1-10, umfassend die Schritte:
- (s1) Starten des Lenkmanövers,
- (s2) Empfangen einer Eingabe einer gewünschten Fahrtrichtung von einer Steuervorrichtung durch eine Bediensteuereinheit,
- (s3) Ermitteln einer gewünschten Fahrabweichung durch die Bediensteuereinheit,
- (s4) Senden einer Antriebsbefehlsausgabe an die Antriebsmotorsteuerschaltungen,
- (s5) Durchführen eines Lenkmanövers durch Senden von Befehlen von den Antriebsmotorsteuerschaltungen an den jeweiligen Antriebsmotor jedes betreffenden Antriebsrads, sodass ein Lenkmanöver allein durch Ändern der Drehzahl und/oder Drehrichtung jedes der Antriebsräder durchgeführt wird,
- (s6) Beenden des Lenkmanövers durch die Steuereinheit, wenn die gewünschte Fahrtrichtung erreicht ist.

12. Computerlesbare Software, die bei Ausführung auf einem Gabelstapler nach einem der Ansprüche 1-10 das Verfahren nach Anspruch 11 ausführt.

## Revendications

1. Chariot élévateur à fourche (1), comprenant une paire de jambes d'appui (2l, 2r), deux fourches de levage (23l, 23r) pour lever et manipuler des palettes (24), dans lequel chaque jambe d'appui (2l, 2r) comporte au moins une roue pivotante (3l, 3r), **caractérisé en ce que** le chariot élévateur à fourche (1) comprend deux roues motrices (4l, 4r) qui sont contrôlables individuellement, dans lequel chaque roue motrice (4r, 4l) est reliée à un moteur d'entraînement respectif (6l, 6r), dans lequel chacune des roues motrices (4l, 4r) a un axe de rotation fixe respectif (20l, 20r) par rapport au chariot élévateur à fourche (1), de telle sorte que le plan de rotation de roues motrices est fixe en parallèle avec la direction longitudinale du chariot élévateur à fourche (1).

2. Chariot élévateur à fourche (1) selon la revendication 1, dans lequel se trouve en outre une plate-forme d'opérateur (5) pour un déplacement d'opérateur avec le chariot élévateur à fourche (1), dans lequel la plate-forme (5) est positionnée en dessous de la partie tout en haut de chaque roue motrice (4l, 4r).

3. Chariot élévateur à fourche (1) selon la revendication 2, dans lequel la plate-forme (5) de l'opérateur est positionnée sur ou en dessous du centre de rotation des roues motrices (4l, 4r).

4. Chariot élévateur à fourche (1) selon l'une quelconque des revendications 2 ou 3, dans lequel la plate-forme d'opérateur (5) est positionnée dans une position entre les roues motrices (4l, 4r).

5. Chariot élévateur à fourche (1) selon l'une quelconque des revendications ci-dessus, dans lequel le chariot élévateur à fourche (1), comprend un timon (15) pour commander le fonctionnement du chariot élévateur à fourche (1).

6. Chariot élévateur à fourche (1) selon l'une quelconque des revendications ci-dessus, dans lequel le chariot élévateur à fourche (1), comprend un manipulateur (20) pour commander le fonctionnement du chariot élévateur à fourche (1).

7. Chariot élévateur à fourche (1) selon l'une quelconque des revendications ci-dessus, dans lequel le chariot élévateur à fourche (1) comprend une unité de contrôle de fonctionnement (16), dans lequel l'unité de contrôle de fonctionnement (16) est agencée pour commander le moteur d'entraînement gauche (6l) et le moteur d'entraînement droit (6r) individuellement.

8. Chariot élévateur à fourche (1) selon l'une quelconque des revendications ci-dessus, dans lequel les roues pivotantes sont agencées pour avoir un diamètre (z) égal ou inférieur à la hauteur (y) des jambes d'appui (2l, 2r).

9. Chariot élévateur à fourche (1) selon l'une quelconque des revendications ci-dessus, dans lequel le centre de rotation horizontal (14) du chariot élévateur à fourche (1) est positionné dans une position sur une ligne (22) tracée entre l'axe de rotation respectif (20l, 20r) des roues motrices (4l, 4r), ceci est obtenu en commandant les roues motrices (4l, 4r) par une rotation individuelle des roues motrices (4l, 4r) vers l'avant et/ou vers l'arrière et avec une vitesse de rotation individuelle.

10. Chariot élévateur à fourche (1) selon l'une quelconque des revendications ci-dessus, dans lequel les fourches (23l, 23r) sont agencées pour avoir une face inférieure au moins partiellement creuse, de telle sorte que les fourches (23l, 23r) peuvent être abaissées sur les jambes d'appui (2l, 2r) en logeant de ce fait au moins une partie des jambes d'appui (2l, 2r), et en rendant de ce fait les fourches (23l, 23r) aptes à venir en prise avec, et à soulever, une palette qui est positionnée sur le sol, un plancher ou un support sur lequel le chariot élévateur à fourche (1) est également positionné.

11. Procédé de commande d'un chariot élévateur à fourche (1) selon l'une quelconque des revendications 1 à 10, comprenant les étapes de :
- (s1) démarrage d'une manoeuvre de direction,
- (s2) réception d'une entrée de direction d'entraînement souhaitée depuis un dispositif de commande par une unité de contrôle de fonctionnement,
- (s3) détermination d'une déviation d'entraînement souhaitée par l'unité de contrôle de fonctionnement,
- (s4) envoi d'une sortie de commande d'entraînement aux circuits de contrôle de moteur d'entraînement,
- (s5) mise en oeuvre d'une manoeuvre de direction en envoyant des commandes depuis les circuits de contrôle de moteur d'entraînement au moteur d'entraînement respectif de chaque roue motrice respective, de telle sorte qu'une manoeuvre de direction est mise en oeuvre seulement en modifiant la vitesse de rotation et/ou la direction de rotation de chacune des roues motrices,
- (s6) l'unité de contrôle termine la manoeuvre de direction lorsque la position souhaitée est atteinte.

12. Logiciel lisible par ordinateur qui, lorsqu'il est exécuté sur un chariot élévateur à fourche selon l'une quelconque des revendications 1 à 10, met en oeuvre le procédé selon la revendication 11.
